# EUROPEAN PATENT APPLICATION

(11) **EP 1 845 658 A2**
(43) Date of publication of application: **17.10.2007**
(21) Application number: 07290321.4
(22) Date of filing: 14.03.2007
(51) Int. Cl.: H04L 12/24

(54) **Digital broadcast receiver and method for receiving a software**

(30) Priority: 11.04.2006 KR 20060032605
(71) Applicant: LG Electronics Inc., Yongdungpo-gu Seoul (KR)
(72) Inventor: Kim, Kyung Ho, Seoul 121-836 (KR)
(74) Representative: Cabinet Plasseraud

(57) **Abstract**

A broadcast receiver and a method for receiving a software are disclosed. The broadcast receiver can transmit/receive software reception - associated information of the broadcast receiver using the network management protocol, can allow the broadcast receiver to receive a software according to the software reception - associated information, and can install the received software in the broadcast receiver. The broadcast receiver can transmit software reception - associated information according to the network management protocol of the broadcast receiver, and can receive the software over the network at a remote site.

## Description

This application claims the benefit of Korean Patent Application No. 10-2006-0032605, filed on April 11, 2006, which is hereby incorporated by reference as if fully set forth herein.

### BACKGROUND OF THE INVENTION

### Field of the Invention

The present invention relates to a broadcast receiver and a method for receiving a software.

### Discussion of the Related Art

Typically, a broadcast receiver provides users with a large number of functions according to a variety of user demands. The functions provided to the users are implemented with a software instead of hardware. Therefore, the software of the broadcast receiver becomes complicated to provide users with many functions, such that the possibility of errors in the software becomes increased.

In the meantime, if unexpected errors occur in the software, or if a new-version software is provided to the user, the user must update a current software with the new-version software. In this case, in order to install the software in several broadcast receivers, the user of the broadcast receiver or the manager of the broadcast receiver must directly install the software in all the broadcast receivers, resulting in inconvenience to the user or the manager.

### SUMMARY OF THE INVENTION

Accordingly, the present invention relates to a broadcast receiver and a method for receiving a software, that substantially obviate one or more problems due to limitations and disadvantages of the

### related art.

An object of the present invention is to provide a broadcast receiver capable of conveniently updating a software with a new software, and a method for receiving the software.

Another object of the present invention is to provide a broadcast receiver for receiving/installing a software at a remote site and a method for receiving the software thereof.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a broadcast receiver is disclosed.

The broadcast receiver can transmit/receive software reception - associated information of the broadcast receiver using the network management protocol, can allow the broadcast receiver to receive a software according to the software reception - associated information, and can install the received software in the broadcast receiver. The broadcast receiver can transmit software reception - associated information according to the network management protocol of the broadcast receiver, and can receive the software over the network at a remote site.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a conceptual diagram illustrating a connection between a management station and a broadcast receiver according to the present invention;

FIG. 2 is a conceptual diagram illustrating a communication method between a management station and a broadcast receiver according to the present invention;

FIG. 3A to 3C are a table illustrating object information associated with software reception according to an embodiment of the present invention;

FIG. 4 is a block diagram illustrating a system including a broadcast receiver connected to a software manager;

FIG. 5 is a flow chart illustrating a method for receiving a software according to an embodiment of the present invention; and

FIG. 6 is a flow chart illustrating a method for receiving a software according to another embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Prior to describing the present invention, it should be noted that a cable headend (i.e., a cable headend) is used as an example of a management station capable of managing a software at a remote site, and a broadcast receiver is used as an example of an apparatus capable of receiving/installing the software. The management station may also be called a software manager for transmitting the software to the broadcast receiver.

The cable headend may be connected to the broadcast receiver over a network, such that bi-directional communication can be implemented between the management station and the broadcast receiver. The above-mentioned cable headend may be indicative of a System Operator (SO) headend or a Multiple System Operator (MSO) headend.

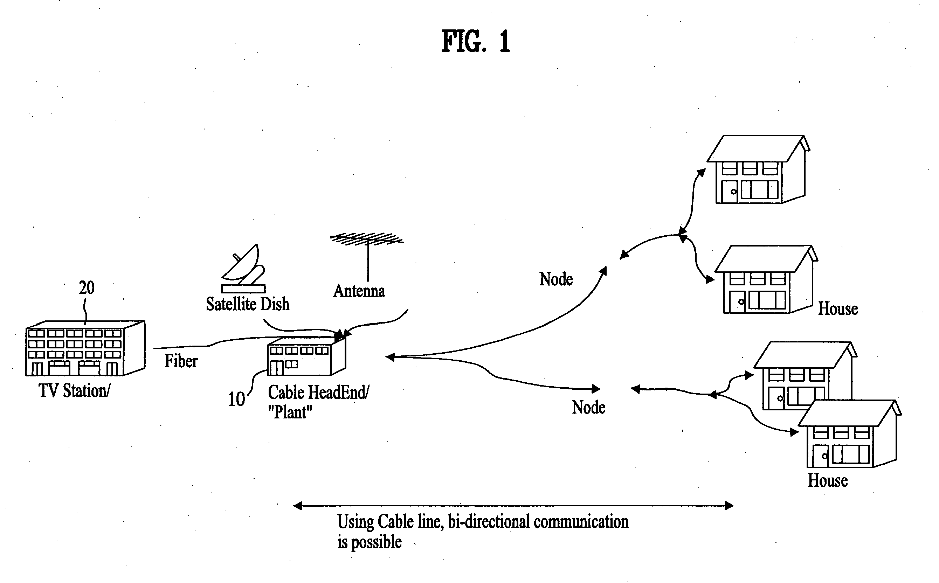

FIG. 1 is a conceptual diagram illustrating a connection between a management station and a broadcast receiver. The management station is connected to the broadcast receiver via a cable line capable of performing the above-mentioned bi-directional communication.

A bi-directional communication modem may also be installed in the broadcast receiver. The above-mentioned bi-directional communication modem is indicative of a network interface device for data communication over a network. A user can view data of a Pay-Per-View (PPV) channel, can view desired broadcast data at a reserved time by referring to Electronic Program Guide (EPG) information, and can record desired broadcast receiver data at a reserved time by referring to the EPG information.

The cable headend receives a broadcast program from a TV broadcast station via an optical cable, a satellite, or an antenna, etc., and transmits the above-mentioned broadcast program to the broadcast receiver via the cable line.

In this case, the cable headend is connected to the broadcast receiver over the network to implement the bi-directional communication. The cable headend may manage the above-mentioned network according to a specific protocol capable of managing the network.

A simple network management protocol (SNMP) function acting as the above-mentioned protocol for managing the network will hereinafter be described in detail. In addition, it should be noted that a remote network monitoring (RMON) function or CIMP(Common Management Information Protocol) may also be exemplarily used to extend/use the SNMP function.

In the meantime, the RMON provides a plurality of enterprises with a variety of languages, such that the enterprises can describe control information of their devices using the languages, such that Management Information Base (MIB) information to be managed is defined by the above-mentioned languages. The MIB information is represented by Structure of Management Information (SMI) language, such that the SMI language can definitely indicate which one of objects can be managed by a manager and which one of objects should be managed by the manager.

The broadcast receiver according to an embodiment of the present invention may include a modem to implement bi-directional communication, and may be connected to the Internet via the modem. Also, the broadcast receiver may implement data communication. Therefore, it is assumed that the bi-directional communication can be implemented between the management station and the broadcast receiver using the SNMP function acting as an Internet protocol.

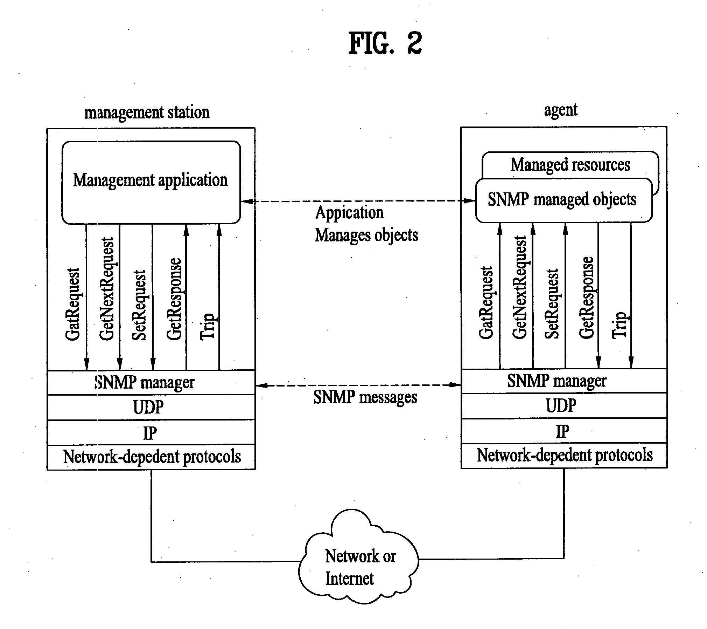

FIG. 2 is a conceptual diagram illustrating a communication method between a management station and a broadcast receiver according to an embodiment of the present invention.

Referring to FIG. 2, the broadcast receiver is exemplarily shown as an agent capable of transmitting response information of network management of the management station.

A term "GetRequest", a term "GetNextRequest", and a term "SetRequest" are indicative of packets capable of being transmitted from the management station to the agent. A term "GetResponse", and a term "Trap" are indicative of packets capable of being transmitted from the agent to the management station. The above-mentioned "GetRequest" "GetNextRequest" and "SetRequest" information are transmitted from the SNMP management station to the network environment via a UDP and an IP.

The above-mentioned "GetRequest", "GetNextRequest" and "SetRequest" are transmitted to the SNMP agent via the UDP and the IP. The above-mentioned SNMP agent determines whether the packet is indicative of the "GetRequest", the "GetNextRequest", or the "SetRequest", and performs a corresponding operation for a SNMP-managed object.

The "GetRequest" packet and the "GetNextRequest" packet are indicative of packets for requesting information of the SNMP-managed object. The above-mentioned "SetRequest" packet is indicative of a packet for setting the SNMP managed object to implement a desired operation. If the "GetRequest" packet and the "GetNextRequest" packet arrive at the SNMP agent, the SNMP agent determines whether a current request relates to a normal object. If it is determined that a specific object is indicative of the SNMP-managed object corresponding to the current request, the SNMP agent transmits the "GetResponse" packet to sequentially arrange the object values for the request, and transmits the sequentially arranged values.

If an event occurs in the agent, a packet is transmitted from the management station. In this case, this packet is generally called a trap packet. If the managed object exceeds a specific range defined in the MIB (Management Information Base) or the value of the managed object is changed to a specific value, the agent transmits the trap packet to the management station, such that the management station is able to process the managed object by referring to the trap packet.

If the management station requests information of an object defined in the MIB from the agent, the agent recognizes whether a corresponding object is managed by the agent itself, and transmits a response message indicating the recognized result to the management station.

If it is determined that the corresponding object is not managed by the agent, the agent may not reply to the request of the management station. If an important event or an emergency situation occurs in the broadcast receiver, the agent may transmit the above-mentioned trap packet to the management station.

In the meantime, items to be managed by the agent are defined as the HOST-MIB, and details of the items may be described as objects. In this case, the host may be used as the same meaning as the agent. A term "M/O" of the HOST-MIB table indicates Mandatory/Optional information. A term "Access" indicates authorities, for example, RO (Read-Only) authority, RW (Read-Write) authority, and N-acc (Not accessible) authority, etc.

A method for receiving a software in order to update a current software installed in the broadcast receiver with a new software defines a variety of information associated with the software reception as object information, and is able to perform transmission/reception of the defined object information as communication described in FIG. 2.

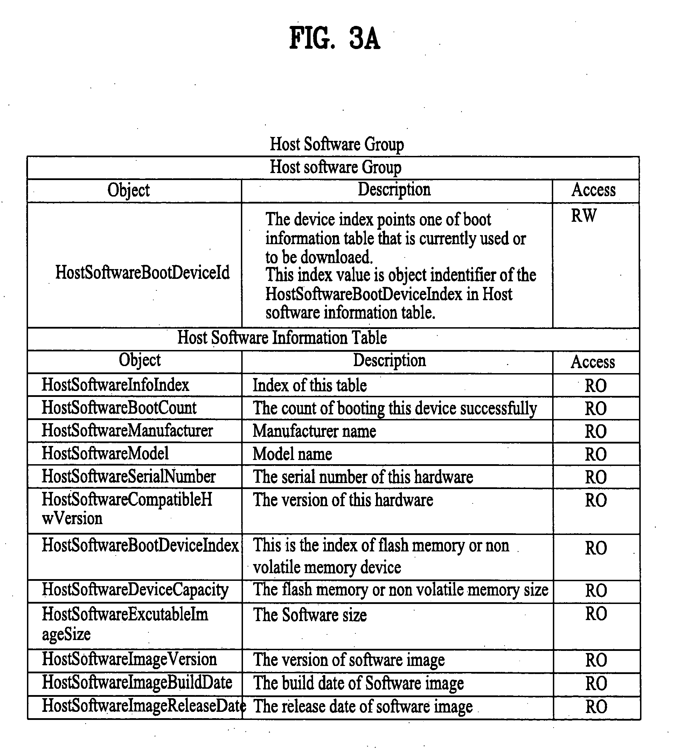

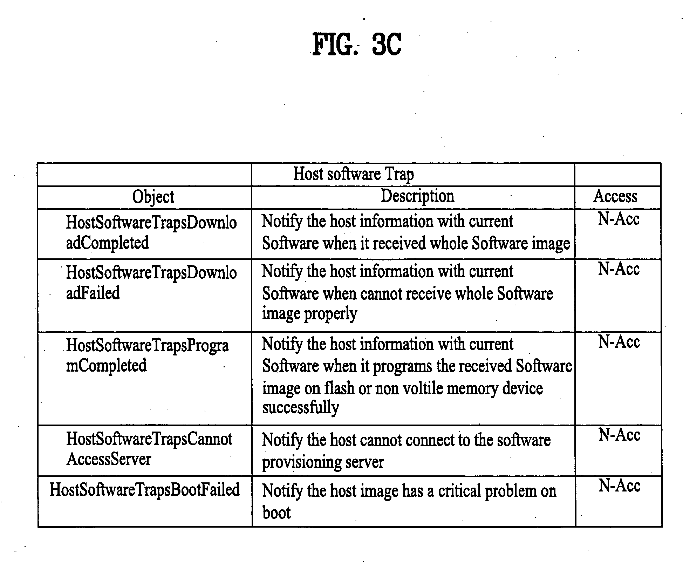

FIG. 3A to 3C illustrates a table illustrating object information associated with software reception according to an embodiment of the present invention. Referring to FIG. 3A to 3C, objects associated with the software reception are classified into a few groups, and a detailed description thereof will hereinafter be described with reference to FIG. 3A to 3C. FIG. 3A to 3C show exemplary object information capable of being transmitted/received by an embodiment of the present invention.

A broadcast receiver for receiving and storing the software in a memory or storage unit may further include a backup partition acting as an independent partition capable of solving the download failure. The host software information table may include either a software installed in the broadcast receiver or software reception - associated information including physical partition information of a hardware unit equipped with a software to be updated at the broadcast receiver. The software reception - associated information contained in the host software information table is shown in FIG. 3A. The software reception - associated information is indicative of information associated with the software to be transmitted and the broadcast receiver to receive the software.

For example, the "HostSoftwareInfoIndex" object is indicative of an index indicating the host software information table in which software reception - associated information is included. If the broadcast receiver successfully boots any one of partitions contained in the storage unit, the "HostSoftwareBootCount" object is indicative of the number of successful booting times of the booted partition.

The "HostSoftwareManufacturer" object is object information indicating a manufacturer name of the corresponding software. The "HostSoftwareModel" object is indicative of a model name of the software. The "HostSoftwareSerialNumber" object is indicative of a serial number of the software. The "HostSoftwareCompatibleHwVersion" object is indicative of a hardware version of the broadcast receiver in which the software can be installed. The "HostSoftwareBootDeviceIndex" object is indicative of an index of a storage unit in which a software is stored. And, The memory device includes a flash memory, a nonvolatile memory, and so on. The "HostSoftwareDeviceCapacity" object is indicative of capacity of a flash memory, a nonvolatile memory, and so on. The "HostSoftwareExcutableImageSize" object is indicative of the software size. The "HostSoftwareImageVersion" object is indicative of object information indicating the software version. The "HostSoftwareImageBuildDate" object is indicative of a manufactured date (i.e., a build date) of the software. The "HostSoftwareImageReleaseDate" object is indicative of a publication date (i.e., a release date) of the software.

The "HostSoftwareInfoIndex" object is indicative of index information of each individual boot partition of the storage unit of the broadcast receiver. For example, the above-mentioned index may be initially set to "0". If the number of boot partitions is "2", this indicates that the bootable device partition is divided into a first partition of "0" and a second partition of "1". In other words, each partition which is identified by an index, has object information contained in Host Software Information Table. If the "HostSoftwareInfoIndex" object is set to "2", this indicates the presence of three boot device partitions. The "HostSoftwareInfoIndex" object may include an unsigned integer defined in the SMI.

Provided that the software is updated with a variety of information (e.g., a new version, a software version, a software manufacture, and a executable file size) can be updated to the SNMP agent when the broadcast is booted.

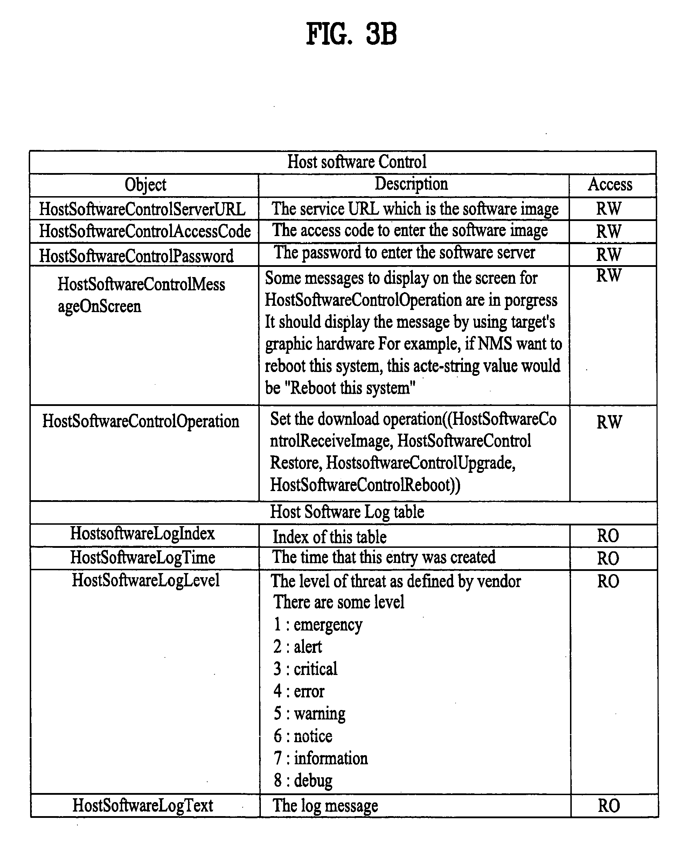

The Host Software Control group of FIG. 3B exemplarily shows software reception control information. The software reception control information is the object information capable of allowing the broadcast receiver to download the software. FIG. 3B shows a variety of objects to be established to download the host software, for example, the "HostSoftwareControlServerURL" object, the "HostSoftwareControlPassword" object, the "HostSoftwareControl-AccessCode" object and the "HostSoftwareControlOperation object, etc.

The "HostSoftwareControlServerURL" object is indicative of object information indicating a service URL at which the software image is located. The network management station may establish the URL of the server including the software at a remote site using the "HostSoftware-ControlServerURL" object.

The "HostSoftwareControlAccessCode" object is indicative of object information which may act as either a password for required for decompressing/decrypting the downloaded image or a key required for a CAS system. In this way, if the compressed- or encrypted- image is released with the key capable of decompressing/decrypting the downloaded image, it is determined whether the corresponding image is indicative of a normal image.

The broadcast receiver may indicate whether the received image on the screen is the normal image using "HostSoftwareControlMessageOnScreen" object.

The "HostSoftwareControlPassword" object is indicative of object information including a password for allowing a user to enter the server at which the software is located.

The "HostSoftwareControlOperation" object is indicative of software download - associated information, for example, a software reception command, a software storage command, a software upgrade command, and a rebooting command, etc. In other words, the network management station may command the broadcast receiver to receive/store/upgrade/reboot the software using the "HostSoftwareControlOperation" object.

The "HostSoftwareControlMessageOnScreen" object indicates specific information capable of displaying a message on a screen of the broadcast receiver while the software is received according to the "HostSoftwareControlOperation" object. A software manager located at a remote site may display a specific message "This system is being rebooted." for rebooting the broadcast receiver.

The "Host Software Log Table" is indicative of a group of object information for storing a log message required for the software operation. The "HostSoftwareLogIndex" object is indicative of a table index of the object information group storing the log message. The "HostSoftwareLogTime" object is indicative of time information of the log message. The "HostSoftwareLogLevel" object is indicative of object information indicating a few messages defined in the log message.

A variety of messages depending on the "HostSoftwareLogLevel" object is shown in the following Table 1. The following Table 1 exemplarily shows a variety of messages capable of being notified after the software is updated and the booting is completed.

**Table 1**

| **Value** | **Object** | **Description** |
|---|---|---|
| 1 | emergency | Emergency log |
| 2 | alert | Alert log |
| 3 | critical | Critical log |
| 4 | error | Error |
| 5 | warning | Warning message generated under dangerous situation during host operation |
| 6 | notice | Messages associated with host system operation |
| 7 | information | General information |
| 8 | debug | Message to be debugged |

In case using other values according to the above-mentioned objects shown in Table 1, a network management station located at a remote site (hereinafter referred to as a remote network management station) can properly cope with individual values contained in Table 1.

The "Date And Time" value acting as log record time information can be stored using the "HostSoftwareLogTime" object.

If the host time information is not stored, a time value established in a host may be stored. The "HostSoftwareLogText" object exemplarily shows object information which is a stored log message. The "HostSoftwareLogText" object may be set to an octet string value, such that a log message of 255 bytes may be stored as the "HostSoftwareLogText" object. The remote network management station is able to store the log message as the "HostSoftwareLogText" object, such that it can effectively manage the broadcast receiver acting as a host.

Host software traps exemplarily show a group of object information capable of indicating the software reception status of the broadcast receiver according to the network protocol. A variety of packets capable of notifying the above-mentioned software reception status may include a host IP address and a current host software version information, etc. Generally, if the user does not desire to receive a report, the traps may not be transmitted. The "HostSoftwareTrapsDownloadCompleted" object is indicative of specific information which informs the user of the software-associated host information when all the softwares are received in the broadcast receiver. If the overall software is abnormally received in the broadcast receiver, the "HostSoftwareTrapsDownloadFailed" object is indicative of host information associated with the software. The "HostSoftwareTrapsProgramCompleted" object is indicative of object information capable of notifying that the received software has been normally installed in the broadcast receiver. The "HostSoftwareTrapsCannotAccessServer" object is indicative of specific information capable of indicating that the host is unable to access the server providing the software. The "HostSoftwareTrapsBootFailed" object is indicative of specific information indicating the presence of problems encountered when the host is booted.

The "HostSoftwareBootDeviceId" object is indicative of a boot partition identifier (ID), which informing the software manager to which partition the software program is transmitted in the broadcast receiver. If the boot partition ID is changed to another value, the software may be received in the changed boot partition.

If the software manager selects a specific value from among values contained in the "HostSoftwareBootDeviceIndex" object and transmits a software to the boot device partition corresponding to the selected value, the SNMP agent of the host may be booted using a boot device selected by the software manager as a boot device partition. The "HostSoftwareBootDeviceIndex" object may not exceed a maximum value of the "HostSoftwareInfoIndex" object. If the "HostSoftwareBootDeviceIndex" object may exceed the maximum value of the "HostSoftwareInfoIndex" object, the SNMP agent of the host may disregard the request of the "HostSoftwareBootDeviceIndex" object.

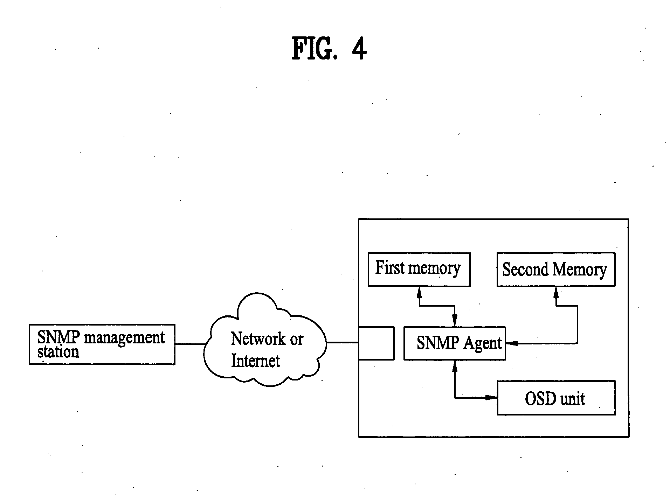

FIG. 4 is a block diagram illustrating a system including a broadcast receiver connected to a software manager according to the present invention.

Referring to FIG. 4, the software manager capable of managing the software may manage the software reception function of the broadcast receiver using the network management protocol at a remote site. Provided that the software manager and the broadcast receiver communicate with each other according to the SNMP acting as the network management protocol, the software manager may act as the SNMP management station 10, and the broadcast receiver may act as the SNMP agent 24. In other words, the SNMP management station 10 manages the broadcast receiver 20 including the SNMP agent 24.

The broadcast receiver 20 may include the modem 23. the modem 23 may act as the network interface device connected to the network or the Internet. For example, the modem 23 may act as the cable modem, and the SNMP management station 10 is connected to the broadcast receiver 20 via a cable, resulting in the implementation of bi-directional communication.

The broadcast receiver 20 may include first and second memories 21 and 22 capable of downloading the software. The first and second memories 21 and 22 may be equal to nonvolatile memories. Also, the first and second memories 21 and 22 may be equal to flash memories or hard disc drives (HDDs). At least two memories may be contained in the broadcast receiver 20, or only one memory may be divided into at least two areas.

The broadcast receiver 20 may include the OSD (On Screen Display) unit 25. The OSD unit 24 is indicative of a graphic processor, and may display messages or graphic data on a screen irrespective of screen resolution.

The above-mentioned broadcast receiver 20 may include the SNMP agent 24 as necessary. The SNMP agent 24 may be operated by a central processing unit (CPU) of the broadcast receiver 20, and may be designed to satisfy all of SNMPv1, SNMPv2, and SNMPv3. The SNMP agent 24 may be manufactured to be suitable for the SNMP specification, and may include a software management object.

If the broadcast receiver 20 is powered on, the modem 23 may be connected to the network or the Internet. The SNMP agent 24 determines whether the broadcast receiver 20 is connected to the network or the Internet.

The SNMP management station 10 determines whether the broadcast receiver 20 is connected to the SNMP agent 24 via the modem 23. If required, the SNMP management station 20 transmits "GetRequest" and "GetNextRequest" objects to the SNMP agent 24, such that it requests desires information from the SNMP agent 24.

The SNMP management station 10 may request information of the software information management object from the SNMP agent 24. For example, the SNMP management station 10 may generate "GetRequest" object in association with "HostSoftwareSerialNumber" object. The SNMP agent 24 acquires software- version information and manufactured company information from the first memory 21 and the second memories 22, and transmits the acquired information to the SNMP management station 10. For example, the SNMP management station may generate "GetResponse" object in association with "HostSoftwareSerialNumber" object.

The SNMP management station 10 checks software information, and determines whether the software must be updated. If it is determined that the software must be updated, the SNMP management station 10 asks the SNMP agent 24 whether to update the software with a new software version. In other words, the SNMP management station 10 transmits the "SetRequest" object, such that it can transmit a message to be displayed on the OSD unit 24 of the broadcast receiver or a graphic processor (not shown). For example, the above-mentioned SNMP management station 10 may transmit the "HostSoftwareControlMessageOnScreen" object.

If the user refuses to update the software, all the operations associated with the software update are terminated. The SNMP agent 23 transmits the trap message to the SNMP management station, such that it can inform the SNMP management station 10 of the interruption of the software update.

If the user approves the software update, the SNMP agent 24 downloads the software in the second memory 22. Needless to say, the user may view data of the broadcast receiver 20 while the software is downloaded in the second memory 22.

Provided that the software is completely downloaded in the second memory 22, the SNMP agent 24 displays a specific message indicating the download completion on the OSD unit 25, powers off the broadcast receiver 20, and may re-boot the broadcast receiver 20.

If the broadcast receiver 20 is re-booted, an overall system is operated by the software stored in the second memory 22, instead of the software stored in the first memory 21.

In this case, if the system fails to operate due to the occurrence of unexpected errors in the software stored in the second memory 22, the SNMP agent 24 records the errors in a specific area of the first memory 21, and drives the system using the software stored in the first memory 21.

In this way, an embodiment of the present invention implements the bi-directional communication between the management station and the broadcast receiver, such that it can update the soft program of the broadcast receiver with a new software version.

The embodiment of present invention provides a software update method for a broadcast receiver capable of bi-directionally communicating the management station.

The management station can check a software state of the broadcast receiver, asks the user whether to update the software with a new software version via the OSD unit, and may download the new software version over the Internet or the network.

Specifically, if the new software version malfunctions, the broadcast receiver is operated by a conventional software, such that the problem encountered by the software bug can be minimized.

The above-mentioned software update method and the above-mentioned data transmission system can allow the user to update a software with a new software version at a remote site without receiving the after-sale (A/S) service from a manufactured company of the broadcast receiver, such that the costs for the after-sale (A/S) service and the degree of dissatisfaction of customers can also be minimized.

The method for receiving a software according to an embodiment of the present invention may include a broadcast-receiver response to a request of the software manager, or may include a trap packet transmission process of the broadcast receiver.

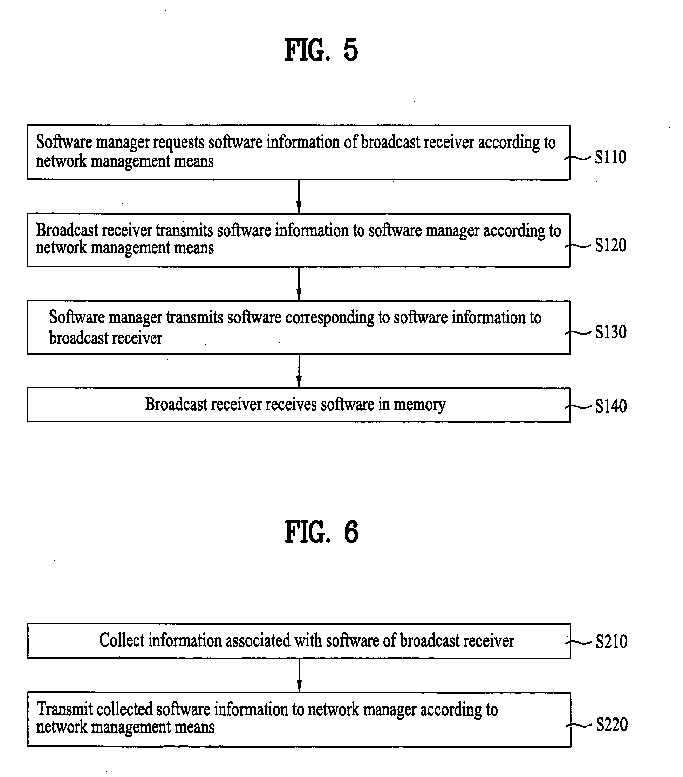

FIG. 5 is a flow chart illustrating a method for receiving a software according to an embodiment of the present invention.

Referring to FIG. 5, if the broadcast receiver connected to the software manager over the network updates a current software with a new software version, the software manager requests information of the software installed in the broadcast receiver according to the network management protocol capable of managing the network at step S110. In this case, the SNMP may be used as the network management protocol.

If the broadcast receiver transmits the above-mentioned software information to the software manager according to the network protocol at step S120, the software manager transmits the software to the broadcast receiver according to the transmitted software information at step S130.

The broadcast receiver may receive the software transmitted from the software manager in its internal memory, and may install the received software at step S140.

FIG. 6 is a flow chart illustrating a method for receiving a software according to another embodiment of the present invention. Referring to FIG. 6, the present invention can receive information for receiving the software according to a trap transmission/reception method.

The broadcast receiver collects information associated with the software installed in the broadcast receiver although there is no request of the software manager at step S210, and transmits the collected software information to the software manager according to the network management protocol capable of managing the network at step S220.

As apparent from the above description, the broadcast receiver and a method for receiving a software according to an embodiment of the present invention can conveniently update a software with a new software, and can receive/install a software at a remote site.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A method for receiving a software in a system in which a broadcast receiver connected to a software manager over a network, the method comprising:
requesting, by the software manager, software information installed in the broadcast receiver according to a network management protocol from the broadcast receiver;
transmitting, by the broadcast receiver, the software information to the software manager according to the network management protocol;
transmitting, by the software manager, a software corresponding to the transmitted software information to the broadcast receiver; and
installing, by the broadcast receiver, the transmitted software in the broadcast receiver.

2. The method according to claim 1, wherein the network management protocol is a simple network management protocol (SNMP).

3. The method according to claim 1, wherein the software information includes a software reception - associated information which is indicative of information associated with the software to be transmitted and the broadcast receiver to receive the software.

4. The method according to claim 3, wherein the software reception - associated information is indicative of at least one of information indicating the number of successful booting times of any booted partition from among storage units contained in the broadcast receiver, information indicating a software manufacturer name, information indicating a software serial number, information indicating a hardware version of the broadcast receiver, capacity information of a hardware unit storing the software, information indicating a software size, information indicating a software version, information indicating a software manufactured date, and information indicating a software build date.

5. The method according to claim 1, wherein the software information indicates software reception control information capable of allowing the broadcast receiver to download the software.

6. The method according to claim 5, wherein the software reception control information includes at least one of information indicating location of the software to be received, information indicating decompression or decryption of the software, information indicating a log-in password of a server at which the software is located, information indicating a software reception command, information indicating a software storage command, information indicating a software upgrade command, and information indicating a rebooting command of the broadcast receiver.

7. The method according to claim 1, wherein the software information indicates log-message information displayed by operations of the broadcast receiver.

8. The method according to claim 7, wherein the log-message information includes at least one of time information indicating a log-generation time, log-text information storing log-message contents, and log-level information indicating a log message based on software reception.

9. The method according to claim 1, wherein the software information includes trap information by which the broadcast receiver unilaterally indicates a software reception status.

10. The method according to claim 1, wherein the software information includes a boot partition identifier for receiving the software from among storage units of the broadcast receiver.

11. A method for allowing a broadcast receiver connected to a software manager over a network to receive a software comprising:
collecting, by the broadcast receiver, information associated with the software installed in the broadcast receiver; and
transmitting the collected software information to the software manager according to a network management protocol capable of managing the network.

12. The method according to claim 11, wherein the network management protocol is a simple network management protocol (SNMP).

13. The method according to claim 11, wherein the software reception - associated information is indicative of at least one of information indicating the number of successful booting times of any booted partition from among storage units contained in the broadcast receiver, information indicating a software manufacturer name, information indicating a software serial number, information indicating a hardware version of the broadcast receiver, capacity information of a hardware unit storing the software, information indicating a software size, information indicating a software version, information indicating a software manufactured date, and information indicating a software build date.

14. The method according to claim 11, wherein the software reception control information includes at least one of location information of the software to be received, information indicating decompression or decryption of the software, information indicating a log-in password of a server at which the software is located, information indicating a software reception command, information indicating a software storage command, information indicating a software upgrade command, and information indicating a rebooting command of the broadcast receiver.

15. The method according to claim 11, wherein the software information includes at least one of time information indicating a log-generation time, log-text information storing log-message contents, and log-level information indicating a log message based on software reception.

16. The method according to claim 11, wherein the software information includes trap information by which the broadcast receiver unilaterally indicates a software reception status.

17. The method according to claim 11, wherein the software information includes a boot partition identifier for receiving the software from among storage units of the broadcast receiver.

18. A broadcast receiver connected to a network, the broadcast receiver comprising:
a network interface device connected to the network;
a memory for storing a software; and
a controller for performing transmission/reception of information associated with the stored software according to a network management protocol for managing the network, receiving a software different from the stored software from the network interface device, and updating the software stored in the memory with the received software.

19. The broadcast receiver according to claim 18, wherein the memory includes a first memory and a second memory, the first memory stores a software which is being operated, and the second memory stores another software received over the network.

20. The broadcast receiver according to claim 18, wherein the controller includes a simple network management protocol (SNMP) agent.
